# EUROPÄISCHE PATENTSCHRIFT

(11) **EP 1 245 475 B1**
(45) Veröffentlichungstag und Bekanntmachung des Hinweises auf die Patenterteilung: **01.09.2004**
(21) Anmeldenummer: 02002924.5
(22) Anmeldetag: 09.02.2002
(51) Int. Cl.: B62D 15/02

(54) **Lenkwinkelsensor**
Steering angle sensor
Capteur d'angle de direction

(30) Priorität: 28.03.2001 DE 10116393
(43) Veröffentlichungstag der Anmeldung: 02.10.2002
(73) Patentinhaber: Valeo Schalter und Sensoren GmbH, 74321 Bietigheim-Bissingen (DE)
(72) Erfinder: Ruff, Achim, 74354 Besigheim (DE); Sengenès, Pierre, 47600 Nerac (FR); Spazierer, Hubert, 74321 Bietigheim (DE)
(74) Vertreter: Dreiss, Fuhlendorf, Steimle & Becker

(56) Entgegenhaltungen:
- EP-A- 1 108 976
- DE-A- 4 243 778
- DE-A- 19 754 191
- DE-U- 29 915 998

## Beschreibung

Die Erfindung betrifft einen Lenkwinkelsensor zur Bestimmung der Drehstellung eines Lenkrades eines Fahrzeugs, mit einer mit dem Lenkrad direkt oder indirekt verbundenen, eine Codierung tragenden Codescheibe, mit wenigstens einer Lichtquelle und wenigstens einem Empfänger, sowie einem Lichtleiter zum Umlenken der von der Lichtquelle abgestrahlten Lichtstrahlen, wobei der Lichtleiter wenigstens eine Lichteinkoppelfläche aufweist.

Aus der DE 197 54 191 A1 ist ein Lenkwinkelsensor für Fahrzeuge bekannt geworden. Bei diesem Lenkwinkelsensor sind auf einer Platine die Lichtquelle und der Empfänger angeordnet, wobei die Lichtstrahlen mittels eines Lichtleiters derart umgelenkt werden, dass sie die Codescheibe von oben anstrahlen und aufgrund der Codierung ein Teil der Lichtstrahlen den Empfänger erreichen.

Auch die DE 299 15 998 U1 offenbart einen Lenkwinkelsensor, bei dem die Lichtstrahlen ebenfalls mittels eines Lichtleiters auf die Codescheibe und den darunter sitzenden Empfänger umgeleitet werden.

Außerdem sind Codescheiben bekannt, deren Codierung nicht nur über den Umfang verteilt ist, sondern deren Codierung sich auch in radialer Richtung erstreckt, d.h. die Codescheiben weisen mehrere Codespuren auf.

Der Erfindung liegt die Aufgabe zugrunde, einen Lenkwinkelsensor bereitzustellen, mit dem Codescheiben abgetastet werden können, deren Codierung sich in Umfangsrichtung und in radialer Richtung erstreckt.

Diese Aufgabe wird bei einem Lenkwinkelsensor mit den Merkmalen des Anspruchs 1 gelöst.

Mittels der Lichtauskoppelflächen, die bezüglich der Codescheibe radial hintereinander angeordnet sind, können die in radialer Richtung verschiedenen Codierungen der Codescheibe ausgelesen werden. Es können daher mit einer einzigen Lichtquelle und einem einzigen Lichtleiter eine Vielzahl von Codierungen, die auf der Ebene der Codescheibe verteilt angeordnet sind, erfasst werden. Diese mehreren Codespuren auf der Codescheibe können entweder gleichzeitig oder selektiv nacheinander ausgelesen werden.

Erfindungsgemäß übergreifen die Finger die Codescheibe in radialer Richtung, d.h. die Finger ragen von außen in Richtung auf die Drehachse der Codescheibe und erstrecken sich über die mit der Codierung versehenen Spuren der Codescheibe. Da die Lichtauskoppelflächen in radialer Richtung hintereinander angeordnet sind, können diejenigen Signale der Codespuren ausgelesen werden, die auf gleichen Radiallinien liegen.

Vorzugsweise besitzen die Finger vier radial hintereinander angeordnete Lichtauskoppelflächen, also dass insgesamt die Signale bzw. Codierungen von vier Spuren erfasst werden können.

Bei einer Weiterbildung ist vorgesehen, dass die der Lochscheibe zugewandte Fläche des Fingers zwei Auskoppelbereiche aufweist und jedem Auskoppelbereich ein oder zwei Lichtauskoppelflächen zugeordnet sind. Die Auskoppelbereiche können z.B. speziell an die Codespuren angepasst sein bzw. können so ausgebildet sein, dass mit ihnen spezielle Codes dieser Spuren ausgelesen werden können. Vorzugsweise weisen diese Auskoppelbereiche bestimmt geformte Lichtaustrittsflächen auf, so dass das Licht gleichmäßig und mit gleicher Helligkeit austritt. Auf diese Weise werden Lesefehler vermieden.

Vorzugsweise besitzen die beiden Auskoppelbereiche unterschiedliche Abstände zur Codescheibe. Auch hierdurch kann die Intensität des auf die Codescheibe auftreffenden Lichts eingestellt werden. Dies wird erfindungsgemäß dadurch noch unterstützt, dass die Lichtauskoppelflächen konvex gekrümmt, insbesondere zylindrisch gekrümmt sind. Entsprechend der Krümmung ist die Streuung des austretenden Lichts einstellbar.

Bei einer Weiterbildung ist vorgesehen, dass die der Codescheibe abgewandte Fläche des Fingers mit wenigstens zwei unter einem Winkel zur Ebene der Codescheibe stehenden Reflexionsflächen versehen ist. Diesen Reflexionsflächen gegenüberliegend befinden sich die Lichtauskoppelflächen, aus welchen die Lichtstrahlen in Richtung auf die Codescheibe austreten. Das Licht, welches den Finger im Wesentlichen in dessen axialer Richtung durchsetzt, wird an den Reflexionsflächen umgelenkt, so dass dieses den Finger an seiner Unterseite verlässt.

Bei einem bevorzugten Ausführungsbeispiel sind drei Finger vorgesehen, die sich radial zur Codescheibe erstrecken. Dabei weisen die drei Finger einen Abstand zueinander auf, so dass sie sich bzw. die darin geführten Lichtstrahlen nicht beeinflussen. Mittels der drei Finger können zum einen unterschiedliche Codespuren ausgelesen werden, zum anderen kann auch die Geschwindigkeit und die Beschleunigung der Codescheibe erfasst werden. Um das über die Lichteinkoppelfläche in den Lichtleiter eingestrahlte Licht optimal auf die drei Finger zu verteilen, befindet sich erfindungsgemäß oberhalb der Lichteinkoppelfläche ein Prisma, welches insbesondere als Ausnehmung ausgebildet ist. Dieses Prisma besitzt drei Reflexionsflächen, welche das Licht auf die drei Finger verteilen. Dabei wird ein Teil des Lichts direkt auf den mittleren Finger und der andere Teil des Lichts über zwei weitere Reflexionsflächen in die beiden anderen Finger gelenkt. Zum Auslesen der Informationen der Codescheibe bedarf es demnach lediglich einer einzigen Lichtquelle.

Mit Vorzug besitzen die einzelnen Lichtauskoppelflächen einen Abstand zueinander. Somit wird lediglich dort Licht aus dem Lichtleiter ausgekoppelt, wo Codespuren an der Codescheibe vorgesehen sind, so dass die zwischen den Codespuren sich befindenden Bereiche nicht beleuchtet werden.

Mit Vorzug sind die Reflexionsflächen auf der Oberseite der Finger und/oder die Flächen des Prismas verspiegelt. Dadurch kann es an diesen Flächen zu keiner Lichtauskopplung kommen wenn diese z.B. beschlagen sind oder wenn sich an diesen Flächen Schmutz ansammelt. Die Verspiegelung kann z.B. mittels Aluminium, Silber oder der gleichen erfolgen.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist.

In der Zeichnung zeigen:
- Fig. 1:: eine perspektivische Darstellung eines Abschnitts einer Codescheibe;
- Fig. 2:: eine perspektivische Ansicht auf die Oberseite des Lichtleiters;
- Fig. 3:: eine perspektivische Ansicht auf die Unterseite des Lichtleiters;
- Fig. 4:: eine Draufsicht auf die Unterseite des Lichtleiters;
- Fig. 5:: einen Schnitt V-V gemäß Fig. 4; und
- Fig. 6:: eine Seitenansicht des Lichtleiters in Richtung des Pfeils VI gemäß Fig. 4.

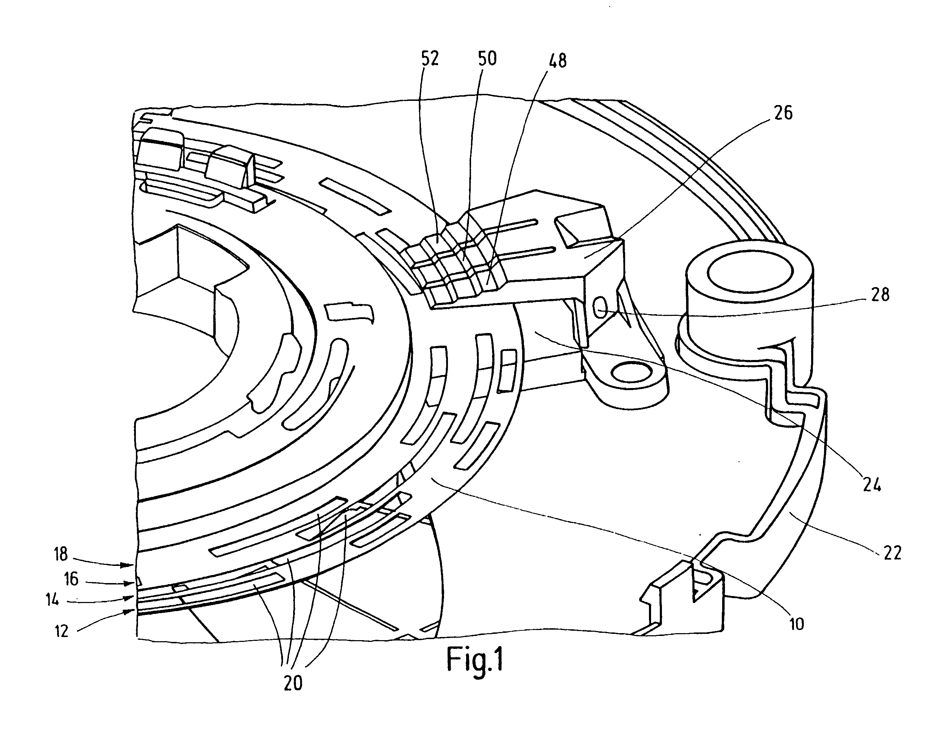

Die Fig. 1 zeigt ausschnittsweise und in perspektivischer Darstellung einen Abschnitt einer Codescheibe 10, welche in insgesamt vier Codespuren 12, 14, 16 und 18 Durchbrüche 20 als Codierung aufweist. Die Codescheibe 10 ist mit einem nicht dargestellten Lenkstock verbunden, so dass sie der Drehbewegungen des Lenkrades folgt. Auf der Innenseite des Unterteils eines Gehäuses 22 ist eine Leiterplatte 24 befestigt, auf welcher in der radialen Entfernung der Codespuren 12 bis 18 nicht dargestellte Empfänger angeordnet sind und auf welcher außerdem ein Lichtleiter 26 angeordnet ist. Vom Lichtleiter 26 verdeckt befindet sich außerdem eine Infrarot-Leuchtdiode 28 auf der Leiterplatte 24.

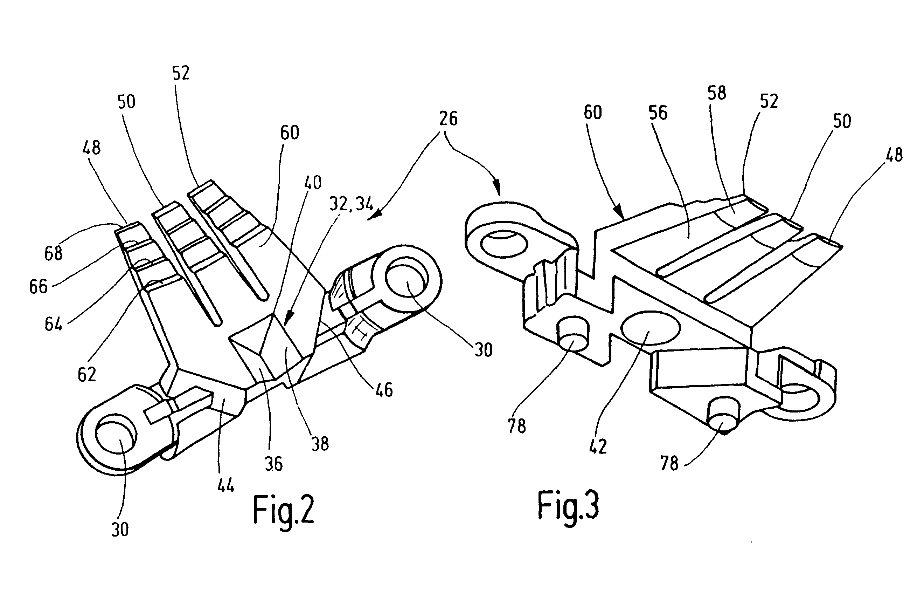

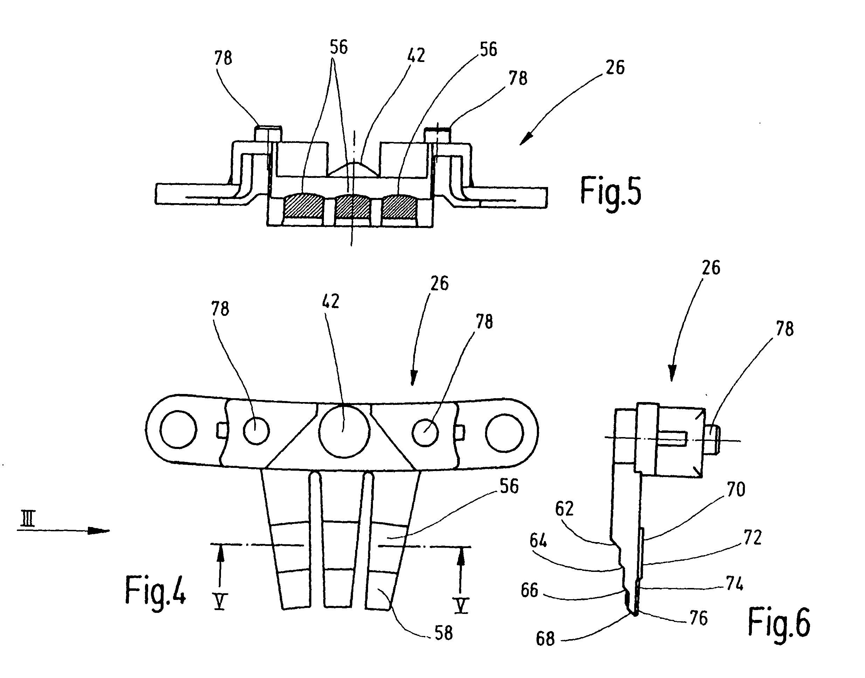

Die Fig. 2 zeigt eine Ansicht auf die Oberseite des Lichtleiters 26, und es sind deutlich die Befestigungsbohrungen 30 zu erkennen, über welche der Lichtleiter 26 am Gehäuse 22 fixiert wird. Außerdem ist ein als Ausnehmung 32 ausgebildetes Prisma 34 erkennbar, welches unmittelbar oberhalb der Infrarot-Leuchtdiode 28 sitzt. Das Prisma 34 besitzt drei Reflexionsflächen 36, 38 und 40, die bevorzugt verspiegelt sind. Das von der Infrarot-Leuchtdiode 28 abgestrahlte Licht trifft auf eine Lichteinkoppelfläche 42, die deutlich in den Fig. 3 und 5 dargestellt ist. Diese Lichteinkoppelfläche 42 ist konvex ausgestaltet und einstückig an der Unterseite des Lichtleiters 26 angeformt.

Außerdem befindet sich die Lichteinkoppelfläche 42 unmittelbar unterhalb des Prismas 34. Das in den Lichtleiter 26 über die Lichteinkoppelfläche 42 eingestrahlte Licht wird an den Reflexionsflächen 36 und 38 in Richtung auf zwei weitere Reflexionsflächen 44 und 46 gelenkt und von den Reflexionsflächen 44, 46 und 40 in Richtung von auf Finger 48, 50 und 52, die einstückig am Lichtleiter 26 angeformt sind und in radialer Richtung abragen, abgelenkt. Die Finger 48, 50 nd 52 erstrecken sich, wie auch aus Fig. 1 ersichtlich, in radialer Richtung bezüglich der Codescheibe 10.

Die Unterseite 54 der Finger 48 bis 52 ist der Oberseite der Codescheibe 10 zugewandt und besitzt zwei Auskoppelbereiche 56 und 58, was auch deutlich in der Fig. 4 dargestellt ist. Diese Auskoppelbereiche 56 und 58 sind konvex gekrümmt, wobei der Auskoppelbereich 58 geringfügig hinter den Auskoppelbereich 56 zurückversetzt ist, so dass er einen größeren Abstand zur Codescheibe 10 aufweist.

Die Oberseite 60 der Finger 48 bis 52 weist insgesamt vier Reflexionsflächen 62, 64, 66 und 68 auf, die in radialer Richtung gesehen hintereinander angeordnet sind. Die Reflexionsflächen bilden, wie aus den Fig. 1 und 6 deutlich erkennbar ist, einen von 90° verschiedenen Winkel zur Ebene der Codescheibe 10. Auch diese Reflexionsflächen 62 bis 68 und die Reflexionsflächen 44 und 46 sind verspiegelt. Die Reflexionsflächen 62 bis 68 haben den Zweck, dass ein Teil des in den Fingern 48 bis 52 geführten Lichts in Richtung der Auskoppelbereiche 56 und 58, d.h. in Richtung auf die Codescheibe 10, umgelenkt wird. Dadurch werden in den beiden Auskoppelbereichen 56 und 58 jeweils zwei Lichtauskoppelflächen 70, 72 und 74, 76 gebildet. Die Position dieser Lichtauskoppelflächen 70 bis 76 entspricht exakt den radialen Positionen der Codespuren 12 bis 18.

Aus den Fig. 3, 5 und 6 ist außerdem noch erkennbar, dass die Unterseite des Lichtleiters 26 zwei Fortsätze 78 aufweist, mit welchen der Lichtleiter 26 passgenau in die Leiterplatte 24 eingesetzt werden kann.

## Patentansprüche

1. Lenkwinkelsensor zur Bestimmung der Drehstellung eines Lenkrads eines Fahrzeugs, mit einer mit dem Lenkrad direkt oder indirekt verbundenen, eine Codierung tragenden Codescheibe (10), mit wenigstens einer Lichtquelle (28) und wenigstens einem Empfänger, sowie einem Lichtleiter (26) zum Umlenken der von der Lichtquelle (28) abgestrahlten Lichtstrahlen, wobei der Lichtleiter (26) wenigstens eine Lichteinkoppelfläche (42) aufweist, **dadurch gekennzeichnet,**
**dass** der Lichtleiter (26) mehrere sich in radialer Richtung über der Codescheibe (10) erstreckende Finger (48, 50, 52) aufweist, wobei die Finger (48, 50, 52) an ihrer der Codescheibe (10) zugewandten Fläche wenigstens zwei radial hintereinander angeordnete Lichtauskoppelflächen (70, 72, 74, 76) besitzen.

2. Lenkwinkelsensor nach Anspruch 1, **dadurch gekennzeichnet, dass** die Finger (48, 50, 52) vier radial hintereinander angeordnete Lichtauskoppelflächen (70, 72, 74, 76) besitzt.

3. Lenkwinkelsensor nach Anspruch 1 oder 2, **dadurch gekennzeichnet, dass** die der Codescheibe (10) zugewandte Fläche der Finger (48, 50, 52) zwei Auskoppelbereiche (56, 58) aufweist und jedem Auskoppelbereich (56, 58) ein oder zwei Lichtauskoppelflächen (70, 72, 74, 76) zugeordnet ist bzw. sind.

4. Lenkwinkelsensor nach Anspruch 3, **dadurch gekennzeichnet, dass** die beiden Auskoppelbereiche (56, 58) unterschiedliche Abstände zur Codescheibe (10) aufweisen.

5. Lenkwinkelsensor nach einem der vorhergehenden Ansprüche, **dadurch gekennzeichnet, dass** die Lichtauskoppelfläche (70, 72, 74, 76) konvex gekrümmt, insbesondere zylindrisch gekrümmt ist.

6. Lenkwinkelsensor nach einem der vorhergehenden Ansprüche, **dadurch gekennzeichnet, dass** die der Codescheibe (10) abgewandte Fläche (60) des Fingers (48, 50, 52) mit wenigstens zwei unter einem von 90° verschiedenen Winkel zur Ebene der Codescheibe (10) stehenden Reflexionsflächen (62, 64, 66, 68) versehen ist.

7. Lenkwinkelsensor nach Anspruch 7, **dadurch gekennzeichnet, dass** an der der Reflexionsfläche (62, 64, 66, 68) gegenüberliegenden Fläche die Lichtauskoppelfläche (70, 72, 74, 76) angeordnet ist.

8. Lenkwinkelsensor nach Anspruch 6 oder 7, **dadurch gekennzeichnet, dass** die Reflexionsfläche (62, 64, 66, 68) verspiegelt ist.

9. Lenkwinkelsensor nach einem der Ansprüche 1 bis 8, **dadurch gekennzeichnet, dass** drei Finger (48, 50, 52) vorgesehen sind.

10. Lenkwinkelsensor nach Anspruch 9, **dadurch gekennzeichnet, dass** die drei Finger (48, 50, 52) sich radial zur Codescheibe (10) erstrecken.

11. Lenkwinkelsensor nach Anspruch 9 oder 10, **dadurch gekennzeichnet, dass** die drei Finger (48, 50, 52) einen Abstand zueinander aufweisen.

12. Lenkwinkelsensor nach einem der Ansprüche 9 bis 11, **dadurch gekennzeichnet, dass** die drei Finger (48, 50, 52) im Wesentlichen gleich ausgebildet sind.

13. Lenkwinkelsensor nach einem der vorhergehenden Ansprüche, **dadurch gekennzeichnet, dass** oberhalb der Lichteinkoppelfläche (42) ein Prisma (34) angeordnet ist.

14. Lenkwinkelsensor nach Anspruch 13, **dadurch gekennzeichnet, dass** das Prisma (34) als Ausnehmung (32) ausgebildet ist.

15. Lenkwinkelsensor nach einem der Ansprüche 9 bis 12 und nach Anspruch 12 oder 13, **dadurch gekennzeichnet, dass** die Lichtstrahlen vom Prisma (34) direkt in den mittleren Finger (50) und über zwei Reflexionsflächen (44, 46) in die beiden anderen Finger (48, 52) umgelenkt werden.

16. Lenkwinkelsensor nach einem der Ansprüche 13 bis 15, **dadurch gekennzeichnet, dass** das Prisma (34) und/oder die Reflexionsflächen (44, 46) verspiegelte Flächen aufweisen.

17. Lenkwinkelsensor nach einem der vorhergehenden Ansprüche, **dadurch gekennzeichnet, dass** die einzelnen Lichtauskoppelflächen (70, 72, 74, 76) einen Abstand zueinander aufweisen.

## Claims

1. Steering angle sensor for determining the rotary position of a steering wheel of a vehicle, having an encoding disk (10) bearing coding, directly or indirectly linked to the steering wheel with at least one light source (28) and at least one receiver and a light guide (26) for deflecting the light rays emitted by the light source (28), whereby the light guide (26) has at least one light injection surface (42), **characterised in that** the light guide (26) has a plurality of fingers (48, 50, 52) extending in the radial direction over the encoding disk (10), whereby the fingers (48, 50, 52) have at least two light extraction surfaces (70, 72, 74, 76) arranged radially one behind the other.

2. Steering angle sensor according to Claim 1, **characterised in that** the fingers (48, 50, 52) have four light extraction surfaces (70, 72, 74, 76) arranged radially one behind the other.

3. Steering angle sensor according to Claim 1 or 2, **characterised in that** the surface of the finger (48, 50, 52) facing towards the encoding disk (10) has two extraction regions (56, 58) and assigned to each extraction region (56, 58) are one or two light extraction surfaces (70, 72, 74, 76).

4. Steering angle sensor according to Claim 3, **characterised in that** the two extraction regions (56, 58) are at different distances from the encoding disk (10).

5. Steering angle sensor according to one of the previous claims, **characterised in that** the light extraction surface (70, 72, 74, 76) is curved convex, particularly cylindrically.

6. Steering angle sensor according to one of the previous claims, **characterised in that** the surface (60) of the finger (48, 50, 52) facing away from the encoding disk (10) is provided with at least two reflecting surfaces (62, 64, 66, 68) arranged at an angle other than 90° to the plane of the encoding disk (10).

7. Steering angle sensor according to Claim 7, **characterised in that** the light extraction surface (70, 72, 74, 76) is arranged on the surface opposing the reflecting surface (62, 64, 66, 68).

8. Steering angle sensor according to Claim 6 or 7, **characterised in that** the reflecting surface (62, 64, 66, 68) is silvered.

9. Steering angle sensor according to one of the claims 1 to 8, **characterised in that** three fingers (48, 50, 52) are provided.

10. Steering angle sensor according to Claim 9, **characterised in that** the three fingers (48, 50, 52) extend radially to the encoding disk (10).

11. Steering angle sensor according to Claim 9 or 10, **characterised in that** the three fingers (48, 50, 52) are arranged at a separation from each other.

12. Steering angle sensor according to one of the claims 9 to 11, **characterised in that** the three fingers (48, 50, 52) are formed substantially the same.

13. Steering angle sensor according to one of the previous claims, **characterised in that** a prism (34) is arranged above the light injection surface (42).

14. Steering angle sensor according to Claim 13, **characterised in that** the prism (34) is designed as a recess (32).

15. Steering angle sensor according to one of the claims 9 to 12 and according to Claim 12 or 13, **characterised in that** the light rays from the prism (34) are deflected directly into the middle finger (50) and via two reflecting surfaces (44, 46) into the two other fingers (48, 52).

16. Steering angle sensor according to one of the claims 13 to 15, **characterised in that** the prism (34) and/or the reflecting surfaces (44, 46) have silvered surfaces.

17. Steering angle sensor according to one of the previous claims, **characterised in that** the individual light extraction surfaces (70, 72, 74, 76) are spaced apart from each other.

## Revendications

1. Capteur angulaire de direction destiné à déterminer la position de rotation d'un volant de direction d'un véhicule, avec un disque à code (10) portant un codage et relié directement ou indirectement au volant de direction, avec au moins une source de lumière (28) et au moins un récepteur, ainsi qu'un conducteur de lumière (26) destiné à renvoyer les faisceaux lumineux émis par la source de lumière (28), le conducteur de lumière (26) présentant au moins une surface d'injection de lumière (42), **caractérisé en ce que** le conducteur de lumière (26) présente plusieurs doigts (48, 50, 52) s'étendant dans le sens radial sur le disque à code (10), les doigts (48, 50, 52) disposant au niveau de leur surface tournée vers le disque à code (10) d'au moins deux surfaces d'extraction de lumière (70, 72, 74, 76) disposées radialement les unes à la suite des autres.

2. Capteur angulaire de direction selon la revendication 1, **caractérisé en ce que** les doigts (48, 50, 52) disposent de quatre surfaces d'extraction de lumière (70, 72, 74, 76) disposées radialement les unes à la suite des autres.

3. Capteur angulaire de direction selon la revendication 1 ou 2, **caractérisé en ce que** la surface des doigts (48, 50, 52) tournée vers le disque à code (10) présente deux zones d'extraction (56, 58) et une ou deux surfaces d'extraction de lumière (70, 72, 74, 76) est ou sont affectée(s) à chaque zone d'extraction (56, 58).

4. Capteur angulaire de direction selon la revendication 3, **caractérisé en ce que** les deux zones d'extraction (56, 58) présentent différentes distances par rapport au disque à code (10).

5. Capteur angulaire de direction selon l'une quelconque des revendications précédentes, **caractérisé en ce que** la surface d'extraction de lumière (70, 72, 74, 76) est à courbure convexe, en particulier à courbure cylindrique.

6. Capteur angulaire de direction selon l'une quelconque des revendications précédentes, **caractérisé en ce que** la surface (60) des doigts (48, 50, 52) tournée vers le disque à code (10) est munie d'au moins deux surfaces réfléchissantes (62, 64, 66, 68) se trouvant sous un angle différent de 90° par rapport au plan du disque à code (10).

7. Capteur angulaire de direction selon la revendication 7, **caractérisé en ce que** la surface d'extraction de lumière (70, 72, 74, 76) est disposée sur la surface opposée à la surface réfléchissante (62, 64, 66, 68).

8. Capteur angulaire de direction selon la revendication 6 ou 7, **caractérisé en ce que** la surface réfléchissante (62, 64, 66, 68) est argentée.

9. Capteur angulaire de direction selon l'une quelconque des revendications 1 à 8, **caractérisé en ce que** trois doigts (48, 50, 52) sont prévus.

10. Capteur angulaire de direction selon la revendication 9, **caractérisé en ce que** les trois doigts (48, 50, 52) s'étendent radialement par rapport au disque à code (10).

11. Capteur angulaire de direction selon la revendication 9 ou 10, **caractérisé en ce que** les trois doigts (48, 50, 52) présentent une distance les uns par rapport aux autres.

12. Capteur angulaire de direction selon l'une quelconque des revendications 9 à 11, **caractérisé en ce que** les trois doigts (48, 50, 52) sont réalisés identiques pour l'essentiel.

13. Capteur angulaire de direction selon l'une quelconque des revendications précédentes, **caractérisé en ce qu'**un prisme (34) est disposé au-dessus de la surface d'injection de lumière (42).

14. Capteur angulaire de direction selon la revendication 13, **caractérisé en ce que** le prisme (34) est réalisé sous forme de creux (32).

15. Capteur angulaire de direction selon l'une quelconque des revendications 9 à 12 et selon la revendication 12 ou 13, **caractérisé en ce que** les faisceaux lumineux du prisme (34) sont renvoyés directement dans le doigt central (50) et via deux surfaces réfléchissantes (44, 46) dans les deux autres doigts (48, 52).

16. Capteur angulaire de direction selon l'une quelconque des revendications 13 à 15, **caractérisé en ce que** le prisme (34) et/ou les surfaces réfléchissantes (44, 46) présentent des surfaces argentées.

17. Capteur angulaire de direction selon l'une quelconque des revendications précédentes, **caractérisé en ce que** les différentes surfaces d'extraction de lumière (70, 72, 74, 76) présentent une distance les unes par rapport aux autres.
